# EUROPÄISCHE PATENTSCHRIFT

(11) **EP 1 266 172 B1**
(45) Veröffentlichungstag und Bekanntmachung des Hinweises auf die Patenterteilung: **25.01.2006**
(21) Anmeldenummer: 01913720.7
(22) Anmeldetag: 24.02.2001
(51) Int. Cl.: F21V 8/00

(54) **BELEUCHTUNGSVORRICHTUNG**
LIGHTING DEVICE
DISPOSITIF D'ECLAIRAGE

(30) Priorität: 14.03.2000 DE 10011800
(43) Veröffentlichungstag der Anmeldung: 18.12.2002
(73) Patentinhaber: ROBERT BOSCH GMBH, 70442 Stuttgart (DE)
(72) Erfinder: RIECHERT, Juergen, 48477 Hoerstel-Bevergern (DE)
(86) Internationale Anmeldenummer: PCT/DE2001/000726
(87) Internationale Veröffentlichungsnummer: WO 2001/069125

(56) Entgegenhaltungen:
- EP-A- 0 884 525
- DE-A- 3 916 471
- GB-A- 2 159 654

## Beschreibung

### Stand der Technik

Die Erfindung geht aus von einer Vorrichtung zur Beleuchtung eines Bedienelementes nach der Gattung des Hauptanspruchs. Es sind schon Bedienelemente bekannt, bei denen sich auf der einem Benutzer abgewandten Seite hinter den Bedienelementen Lichtquellen befinden, wobei eine Beleuchtung der Bedienelemente jeweils durch eine der Lichtquellen erfolgt. Bei einer derartigen Anordnung ist für jedes Bedienelement eine Lichtquelle erforderlich. Hierdurch steigen mit einer zunehmenden Anzahl von Bedienelementen die Kosten für eine Beleuchtung. Außerdem ist durch die Anordnung der Bedienelemente die Position der Lichtquellen vorgegeben.

Eine Vorrichtung zur Beleuchtung eines Bedienelementes nach der Gattung des Hauptanspruchs hat demgegenüber den Vorteil, dass mittels einer an einer Seitenfläche eines Lichtleiters angeordneten Reflexionsfläche das von einer Lichtquelle abgestrahlte Licht in Richtung eines Bedienelements umlenkbar ist. Hierdurch kann für die Lichtquelle eine Position in der Nähe des Bedienelements gewählt werden, ohne dass die Lichtquelle sich direkt auf einer einem Benutzer des Bedienelementes abgewandten Seite unterhalb des Bedienelements befinden muss. Eine elektrische Spannungsversorgung, die im Allgemeinen über eine Leiterplatte erfolgt, kann damit unabhängig von einer Anordnung des Bedienelements erfolgen, da der Ort der Lichtquelle nicht mehr an die Position des Bedienelements gekoppelt ist. Durch die Reflexionsfläche ist das Licht dabei gezielt in Richtung des Bedienelements umlenkbar.

Eine solche Vorrichtung ist aus EP 0 414 366 A bekannt.

### [Vorteile der Erfindung]

Die erfindungsgemäße Vorrichtung zur Beleuchtung eines Bedienelementes sieht vor bei mehreren, vorgesehenen Beleuchtungsbereichen die Beleuchtungsbereiche durch eine Lichtfalle zu trennen, da durch die Lichtfalle ermöglicht wird, einen Lichtleiter für beide Beleuchtungsbereiche zu verwenden, ohne dass Licht von einem Bereich in den anderen Bereich gelangen kann. Durch die Verwendung nur eines Lichtleiters ist eine einfachere Montage z. B. gegenüber einer Montage von zwei Lichtleiterteilen möglich, wobei gleichzeitig die einzelnen Beleuchtungsbereiche getrennt oder in einer unterschiedlichen Farbe beleuchtbar sind.

Durch die in den Unteransprüchen aufgeführten Maßnahmen sind vorteilhafte Weiterbildungen und Verbesserungen der im Hauptanspruch angegebenen Beleuchtungsvorrichtung möglich. Besonders vorteilhaft ist es, dass an einer zweiten Seitenfläche des Lichtleiters eine Vielzahl von Bedienelementen angeordnet sind und dass durch die Reflexionsfläche das abgestrahlte Licht jeweils in die Richtungen der Vielzahl von Bedienelementen umlenkbar ist, da hierdurch für die Vielzahl von Bedienelementen nur eine Lichtquelle benötigt wird. Hierdurch können Lichtquellen eingespart werden oder es können höherwertige Lichtquellen, z. B. recht teure, blaue Leuchtdioden anstelle preisgünstigerer, dafür jedoch andersfarbiger Lichtquellen verwendet werden.

Insbesondere ist es vorteilhaft, dass das abgestrahlte Licht durch die Reflexionsflächen in Richtung der Vielzahl von Bedienelementen bündelbar ist, da hierdurch eine effiziente und homogene Beleuchtung der Bedienelemente gewährleistet ist.

Ferner ist es vorteilhaft, dass die Reflexionsflächen durch eine Ausnehmung oder durch eine Anformung an den Lichtleiter gebildet sind. Da Lichtleiter üblicherweise im Spritzgussverfahren erstellt werden, kann eine Ausnehmung bzw. eine Erweiterung bei der Herstellung ohne zusätzlichen Aufwand mit ausgeformt werden.

Außerdem ist es vorteilhaft, Bedienelemente als Tasten auszuführen, wobei die Füße der Tasten an einer Schaltmatte angeordnet sind oder selbst Teil der Schaltmatte sind, da hierdurch eine Federung für eine Rückstellung der Tasten einerseits und eine Vielzahl von Tastenfüßen andererseits in einem Arbeitsschritt herstellbar sind. Ferner kann hierbei eine Vielzahl von Tastenfüßen in einem Montageschritt an der Beleuchtungsvorrichtung angeordnet werden, da die einzelnen Tastenfüße über die Schaltmatte verbunden sind.

Ferner ist es vorteilhaft, zwischen der Lichtquelle und der Reflexionsfläche eine Streufläche anzuordnen, da hierdurch das Licht in einer gewünschten Richtung auf die Reflexionsfläche ausrichtbar ist.

Ferner ist es vorteilhaft, eine Lichtquelle an einer dem Lichtleiter abgewandten Seite eine Leiterplatte zu montieren, da hierdurch die Leiterplatte direkt an den Lichtleiter montierbar ist, wodurch eine besonders flache Bauform ermöglicht wird.

Außerdem ist es vorteilhaft, den Lichtleiter auf einem reflektierenden Träger anzuordnen, da hierdurch Licht, dass aus dem Lichtleiter ausgekoppelt wird, wieder in den Lichtleiter zurückreflektierbar ist.

Außerdem ist es vorteilhaft, in eine Öffnung des Lichtleiters eine Ausnehmung anzuordnen, mit deren Hilfe das von der Reflexionsfläche in Richtung des Bedienelementes reflektiertes Licht zu dem Bedienelement umlenkbar ist. Durch eine Anordnung einer derartigen Ausnehmung wird die Menge des Lichtes vergrößert, das in Richtung des Bedienelementes ausgekoppelt wird.

Weiterhin ist es vorteilhaft, in den Lichtleiter auf dem Lichtweg zwischen der Reflexionsfläche und dem Bedienelement eine Öffnung und/oder eine Ausnehmung einzubringen, mit dem das von der Reflexionsfläche zu dem Bedienelement reflektierte Licht zumindest teilweise umlenkbar ist.
Hierdurch wird es möglich, bei Bedienelementen, die sehr nahe an einer Lichtquelle positioniert sind, zumindest einen Teil des Lichts umzulenken, so dass für alle Bedienelemente eine gleichmäßige Helligkeit gewährleistet werden kann, da die Helligkeit der der Lichtquelle am nächsten liegenden Bedienelemente auf die Bedienelemente abgestimmt werden kann, die am weitesten von einer Lichtquelle abliegen.

Besonders vorteilhaft ist es ferner, die Vorrichtung zur Beleuchtung von Bedienelementen in einer Fahrerinformationsvorrichtung, einer Navigationsvorrichtung und/oder einer Autoradiovorrichtung in einem Fahrzeug zu verwenden, da insbesondere in einem Fahrzeug, in dem für derartige Geräte nur ein begrenzter Platz zur Verfügung steht, durch die erfindungsgemäße Ausgestaltung neben einer Kostenreduzierung auch eine verringerte Baugröße erreicht wird. Außerdem ist eine geringe Baugröße bei Geräten von Vorteil, die aus Gründen des Diebstahlschutzes aus dem Fahrzeug entnehmbar ausgeführt sind.

### Zeichnung

Ausführungsbeispiele der Erfindung sind in der Zeichnung dargestellt und in der nachfolgenden Beschreibung näher erläutert. Es zeigen Figur 1 eine Seitenansicht eines Schnittes durch eine Beleuchtungsvorrichtung, Figur 2a eine Seitenansicht eines Schnittes durch einen Lichtleiter einer Beleuchtungsvorrichtung, Figur 2b eine Aufsicht auf eine Streufläche eines Lichtleiters einer Beleuchtungsvorrichtung, Figur 3 ein weiteres Ausführungsbeispiel für einen Lichtleiter einer Beleuchtungsvorrichung, Figuren 4a und 4b Ausgestaltungen von Ausnehmungen in einer räumlichen Ansicht, Figuren 5a und 5b weitere Ausführungsformen, Ausnehmungen in einer räumlichen Ansicht, Figur 6 ein Ausführungsbeispiel für eine mechanische Taste, Figur 7 eine Aufsicht auf eine erfindungsgemäße Beleuchtungsvorrichtung, Figur 8 ein Ausführungsbeispiel für eine elektrische Taste, Figur 9 ein weiteres Ausführungsbeispiel für eine Reflexionsfläche, Figur 10 ein weiteres Ausführungsbeispiel für eine Einkopplung von Licht in eine Taste.

### Beschreibung des Ausführungsbeispiels

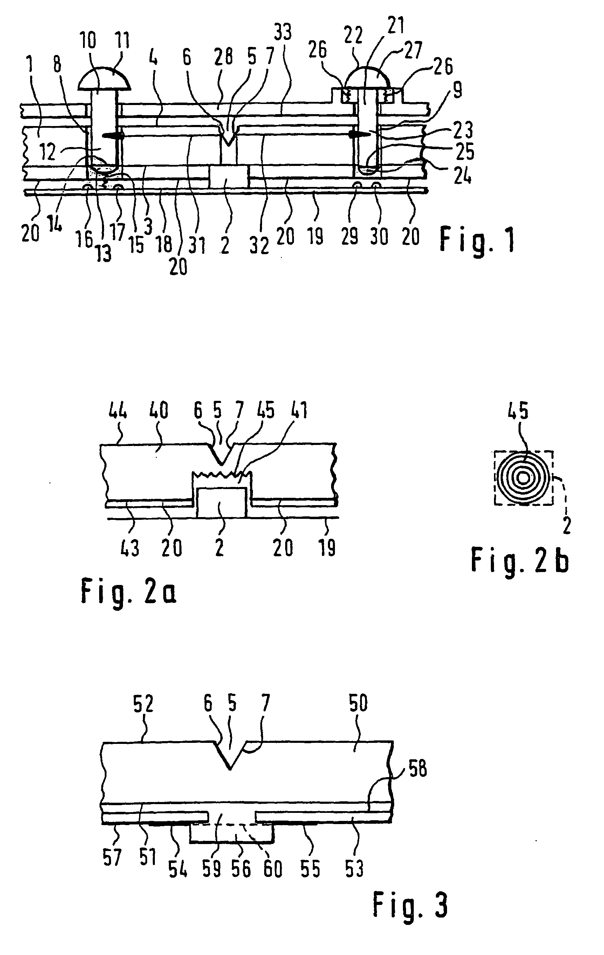

In der Figur 1 ist ein erstes Ausführungsbeispiel für eine Beleuchtungsvorrichtung dargestellt. An einem als eine flache Platte ausgeführten Lichtleiter 1 ist an einer ersten, flachen Seitenfläche 3 eine Lichtquelle 2 angeordnet. An einer zweiten Seitenfläche 4 des Lichtleiters 1, die der ersten Seitenfläche 3 gegenüberliegt, ist in einen der Lichtquelle 2 gegenüberliegenden Bereich eine Ausnehmung 5 eingebracht. Durch die Ausnehmung 5 wird eine erste Reflexionsfläche 6 und eine zweite Reflexionsfläche 7 gebildet, die jeweils an die zweite Seitenfläche 4 anschließen. In den Lichtleiter 1 ist eine erste Öffnung 8 und eine zweite Öffnung 9 eingebracht, die von der ersten Seitenfläche 3 zu der zweiten Seitenfläche 4 des Lichtleiters 1 führen. In der ersten Öffnung 8 ist eine erste Taste 10 angeordnet. Die erste Taste 10 weist eine Bedienfläche 11, einen Tastenfuß 12 und eine elektrisch leitende Schicht 13 auf, die an einer der Bedienfläche 11 abgewandten Seite 14 des Tastenfußes 12 angeordnet ist. An der Seite 14 des Tastenfußes 12 ist ferner ein Federelement 15 befestigt. Durch einen Druck auf die Bedienfläche 11 ist die erste Taste 10 gegen die Spannung des Federelements 15 bewegbar. Bei einem hinreichenden Druck auf die Bedienfläche 11 verschiebt sich dabei die erste Taste 10 derart, dass die elektrisch leitende Schicht 13 einen ersten Kontakt 16 und einen zweiten Kontakt 17 elektrisch leitend verbindet. Der erste elektrische Kontakt 16 und der zweite elektrische Kontakt 17 stehen mit Leiterbahnen 18 in Verbindung, die auf einer Leiterplatte 19 angeordnet sind. Die Leiterplatte 19 verläuft dabei vorzugsweise parallel zu der ersten Seitenfläche 3 des Lichtleiters 1. Auch die Lichtquelle 2 ist an der Leiterplatte 19 angeordnet und steht über in der Figur 1 nicht näher gezeigte Leiterbahnen 18 in einer Verbindung mit einer Spannungsversorgung. Zwischen der Leiterplatte 19 bzw. den Leiterbahnen 18 und der ersten Seitenfläche 3 des Lichtleiters 1 ist ein Reflektor 20 angeordnet. In dem Bereich der ersten Taste 10 und der Lichtquelle 2 weist der Reflektor 20 eine Öffnung auf. In die zweite Öffnung 9 ist eine zweite Taste 21 mit einer Bedienfläche 22, einem Tastenfuß 23 und einer elektrisch leitenden Beschichtung 24 an einer der Bedienfläche 22 abgewandten Seite 25 des Tastenfußes 23 angeordnet. Die zweite Taste 21 ist bei einem Druck auf die Bedienfläche 22 gegen Federelemente 26 bewegbar, die zwischen einem Tastenkopf 27 und einer Abdeckung 28 angeordnet sind. Die Abdeckung 28 verläuft vorzugsweise parallel zu der zweiten Seitenfläche 4 des Lichtleiters 1 und weist im Bereich der ersten Öffnung 8 eine Öffnung für die erste Taste 10 und im Bereich der zweiten Öffnung 9 eine Öffnung für die zweite Taste 21 auf. Bei einem hinreichenden Druck auf die Bedienfläche 22 der zweiten Taste 21 tritt die elektrisch leitenden Beschichtung 24 an der Seite 25 des Tastenfußes 23 in Kontakt zu einem ersten Kontakt 29 und einem zweiten Kontakt 30, die jeweils mit unterschiedlichen Leiterbahnen 18, die auf der Leiterplatte 19 angeordnet sind, verbunden sind. Sowohl durch die erste Taste 10 als auch durch die zweite Taste 21 ist damit ein elektrischer Kontakt schließbar.

Die Lichtquelle 2 ist vorzugsweise als eine Leuchtdiode ausgeführt. Ferner ist es möglich, auch eine Glühlampe oder eine Kaltkathodenfluoreszenzlampe zu verwenden. Das von der Lichtquelle 2 ausgestrahlte Licht wird in Richtung der ersten Reflexionsfläche 6 und der zweiten Reflexionsfläche 7 abgestrahlt. Es durchquert den aus einem transparenten Material gefertigten Lichtleiter 1. Der Lichtleiter 1 ist vorzugsweise aus einem transparenten Kunststoff gefertigt, z. B. Polycarbonat oder PMMA (Polymethylmetacrylat). Symbolisch ist ein erster Lichtstrahl 31 und ein zweiter Lichtstrahl 32 eingezeichnet. Der erste Lichtstrahl 31, der von der Lichtquelle 2 zu der ersten Reflexionsfläche 6 verläuft, wird von der ersten Reflexionsfläche 6 in Richtung der ersten Taste 10 reflektiert. Die erste Taste 10 ist aus einem lichtstreuenden Material, vorzugsweise einem lichtstreuenden Kunststoff gefertigt, z.B. einem lichtstreuenden Kunststoff, in den lichtstreuende Partikel eingebracht sind. Der erste Lichtstrahl 31, der in dem Lichtleiter 1 nur vernachlässigbar absorbiert wird, wird durch das lichtstreuende Material der ersten Taste 10 gestreut, so dass das Licht in der ersten Taste 10 verteilt und zu der Bedienfläche 11 umgelenkt wird, so dass die Bedienfläche 11 und z.B. ein auf der Bedienfläche 11 angeordnetes Symbol zur Beschriftung der ersten Taste 10 beleuchtet wird. Der zweite Lichtstrahl 32 verläuft von der Lichtquelle 2 zu der zweiten Reflexionsfläche 7 und wird von dieser weiter zu der zweiten Taste 21 umgelenkt. Mit der Lichtquelle 2 sind somit die erste Taste 10 und die zweite Taste 21 gleichzeitig beleuchtbar, wobei die Lichtquelle 2 sowohl entfernt von der ersten Taste 10 als auch entfernt von der zweiten Taste 21 angeordnet ist. Die zweite Taste 21 ist ebenso wie die erste Taste 10 aus einem lichtstreuenden Material gefertigt, so dass das Licht zu der Bedienfläche 22 der zweiten Taste 21 umgelenkt wird.

Die erste Taste 10 unterscheidet sich von der zweiten Taste 21 in der Anordnung des Federelementes. Das Federelement 15 der ersten Taste 10 ist zwischen der elektrisch leitenden Schicht 14 und der Leiterplatte 19 angeordnet. Die Federelemente 26 der zweiten Taste 21 sind zwischen der Abdeckung 28 und einem Tastenkopf 27 der zweiten Taste 21 angeordnet. Ferner ist auch eine in der Figur nicht gezeigte Anordnung des Federelements 26 zwischen dem Lichtleiter 1 und dem Tastenkopf 27 möglich. Die Abdeckung 28 ist vorzugsweise aus einem undurchsichtigen Material, vorzugsweise einem Kunststoffmaterial gefertigt. Die Abdeckung 28 dient dazu, den Lichtleiter 1 gegenüber einem Benutzer abzudecken, so dass der Lichtleiter 1 sonst für einen Betrachter nicht sichtbar ist und hierdurch die Aufmerksamkeit des Betrachters nur auf die erste Taste 10 bzw. auf die zweite Taste 21 gelenkt wird. Die Abdeckung 28 ist auf einer dem Lichtleiter 1 zuweisenden Seite 33 vorzugsweise mit einer reflektierenden Beschichtung versehen. Zwar wird das von der Lichtquelle 2 ausgestrahlte Licht durch die erste Reflexionsfläche 6 und die zweite Reflexionsfläche 7 bevorzugt in Richtung der ersten Taste 10 bzw. der zweiten Taste 21 reflektiert, jedoch kann auch Streulicht auftreten, das den Lichtleiter 1 durch die zweite Seitenfläche 4 oder die erste Seitenfläche 3 des Lichtleiters 1 verlassen kann, nicht ausgeschlossen werden. Durch die reflektierende Seite 33 der Abdeckung 28 wird dieses Licht zurück in den ersten Lichtleiter 1 reflektiert. Ebenso wird durch den.Reflektor 20 Licht, das den Lichtleiter 1 durch die erste Seitenfläche 3 verlässt, zurück in den Lichtleiter 1 reflektiert. Die Reflexion an der ersten und zweiten Reflexionsfläche 6, 7 ist vorzugsweise eine Totalreflexion, die verlustfrei erfolgt. Ferner ist auch eine Leitung von Licht in dem Lichtleiter 1 durch Totalreflexion möglich. Die reflektierende Seite 33 und der Reflektor 20 sind in einem bevorzugten Ausführungsbeispiel aus einem weißen, lichtstreuenden Kunststoffmaterial gefertigt. Ferner ist auch eine vorzugsweise metallisch verspiegelte Ausführung der Schicht 33 und/oder des Reflektors 20 möglich. Der Reflektor 20 ist dabei ferner in einem bevorzugten Ausführungsbeispiel als ein Träger des Lichtleiters ausgeführt.

Die Leiterplatte 19 ist vorzugsweise aus einem Kunststoffmaterial gefertigt. Die Kontakte 16, 17, 29 und 30 sind als elektrische Kontaktflächen, vorzugsweise als metallische Kontaktflächen ausgeführt. Die elektrisch leitende Beschichtung 13, 24 ist jeweils vorzugsweise aus einem elektrisch leitfähigen Kunststoffmaterial gefertigt.

In der Figur 2a ist ein weiteres Ausführungsbeispiel für einen Lichtleiter dargestellt. Im Folgenden bezeichnen gleiche Bezugszeichen auch gleiche Elemente. In einen zweiten Lichtleiter 40 ist eine Ausnehmung 41 in eine erste Seitenfläche 43 des zweiten Lichtleiters 40 eingebracht, die zur Aufnahme der Lichtquelle 2 dient. In eine der ersten Seitenfläche 43 gegenüberliegende zweite Seitenfläche 44 des zweiten Lichtleiters 40 ist die Ausnehmung 5 mit der ersten Reflexionsfläche 6 und der zweiten Reflexionsfläche 7 entsprechend der zu der Figur 1 beschriebenen Ausnehmung 5 eingebracht. Die Lichtquelle 2 ragt zumindest teilweise in die Ausnehmung 41 hinein, so dass der Abstand zwischen der Leiterplatte 19 zu dem Reflektor 20 bzw. zu der ersten Seitenfläche 43 gegenüber dem Abstand zwischen der Leiterplatte 19 und der ersten Seitenfläche 3 in der Figur 1 verringert werden kann. Die zwischen der Lichtquelle 2 und der Ausnehmung 5 verlaufende Oberfläche der zweiten Ausnehmung 41 ist als eine Streufläche 45 ausgeführt. Eine lichtstreuende Eigenschaft kann hierbei z. B. durch ein Bedrucken mit einer weißen Farbe erreicht werden. Ferner kann auch die Oberfläche des Lichtleiters im Bereich der Streufläche durch Ätzen oder durch ein mechanisches Aufrauhen in eine streuende Oberfläche verändert sein. In einem bevorzugten Ausführungsbeispiel ist die Streufläche 45 als eine in den Lichtleiter eingebrachte bzw. angeformte Rillenstruktur ausgeführt, die bei einer Spritzgussfertigung des zweiten Lichtleiters 40 mit an den beiden Lichtleiter 40 angebracht wird. Der zweite Lichtleiter 40 kann dabei anstelle des ersten Lichtleiters 1 in der Figur 1 verwendet werden. Durch die Streufläche 45 wird das Licht auf die Ausnehmung 5 konzentriert. In der Figur 2b ist eine Aufsicht auf die Streufläche 45 dargestellt. Gestrichelt ist der Umriss der Lichtquelle 2 eingezeichnet, die als eine Leuchtdiode mit einem rechteckigen Gehäuse ausgeführt ist. Die Streufläche 45 ist hierbei vorzugsweise als eine Fresnellinse ausgeführt, die das von der Lichtquelle 2 abgestrahlte auf die Ausnehmung 5 konzentriert.

In der Figur 3 ist ein weiteres Ausführungsbeispiel für einen Ausschnitt aus einem Lichtleiter im Bereich der Reflexionsflächen bzw. der Lichtquelle gezeigt. Ein dritter Lichtleiter 50 weist ebenfalls die Ausnehmung 5 mit der ersten Reflexionsfläche 6 und der zweiten Reflexionsfläche 7 auf, die in eine zweite Seitenfläche 52 des Lichtleiters 5 eingebracht ist. An einer der zweiten Seitenfläche 52 gegenüberliegenden ersten Seitenfläche 51 des flächig ausgeführten Lichtleiters 50 ist eine Leiterplatte 53 angeordnet. Auf der Leiterplatte 53 sind Leiterbahnen 54, 55 angeordnet, die u. a. zur Spannungsversorgung einer Lichtquelle 56 dienen. Die Leiterbahnen 54, 55 sind ebenso wie die Lichtquelle 56 auf einer dem dritten Lichtleiter 50 abgewandten Seite 57 der Leiterplatte 53 angeordnet. Bei dem dritten Lichtleiter 50 zuweisende Seitenfläche 58 der Leiterplatte 53 ist vorzugsweise mit einer reflektierenden Schicht versehen, die dazu dient, aus dem dritten Lichtleiter 50 austretendes Licht zurück in den dritten Lichtleiter 50 zu reflektieren. Die Leiterplatte 53 weist eine Öffnung 59 auf, durch die Licht von der Lichtquelle 56 zu der Ausnehmung 5 abstrahlbar ist. Eine Lichtaustrittsfläche 60 der Lichtquelle 56 ist in der Figur 3 gestrichelt eingezeichnet. Dadurch, dass die Lichtquelle 56 auf einer dem dritten Lichtleiter 50 abgewandten Seite der Leiterplatte 53 angebracht ist, ist einerseits eine platzsparende Bauweise durch einen sehr geringen Abstand zwischen der Leiterplatte 53 und dem dritten Lichtleiter 50 möglich, andererseits kann auf eine in den dritten Lichtleiter 50 eingebrachte Ausnehmung im Bereich der Lichtquelle 56 verzichtet werden. Die Lichtquelle ist dabei vorzugsweise als eine sogenannte Gulwing-Diode ausgeführt.

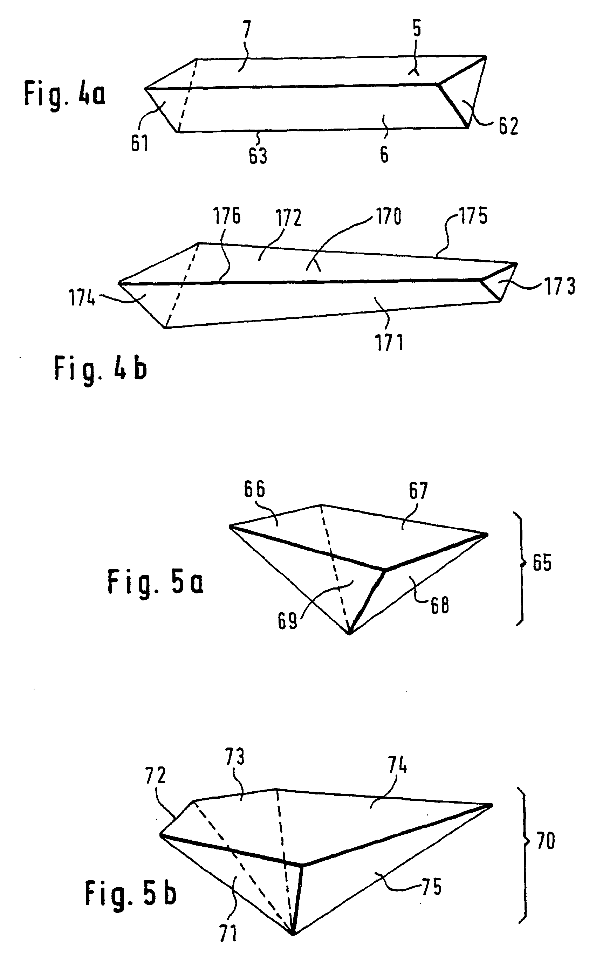

In der Figur 4a ist die keilförmige, zu der Figur 1 beschreibene Ausnehmung 5 mit der ersten und der zweiten Reflexionsfläche 6, 7 räumlich dargestellt. Die Ausnehmung 5, die sich entlang einer Keilkante 63 erstreckt, wird von einer ersten Seitenfläche 61 und einer zweiten Seitenfläche 62 begrenzt, die ebenso wie die Reflexionsflächen 6, 7 aus dem Lichtleiter gebildet werden. Die in der Figur 4a dargestellte Ausnehmung 5 ist symmetrisch zu der Keilkante 63 ausgebildet, wobei die Reflexionsflächen Rechtecke bilden. In der Figur 4b ist eine zweite Ausnehmung 170 mit einer ersten Reflexionsfläche 171 und einer zweiten Reflexionsfläche 172 dargestellt, die Vierecke jedoch keine Rechtecke sind. Die zweite Ausnehmung 170 weist ferner eine erste Seitenfläche 173 und eine zweite Seitenfläche 174 auf, wobei die zweite Seitenfläche 174 größer als die erste Seitenfläche ist, wobei die Seitenflächen gegenüberliegend die zweite Ausnehmung 170 begrenzen. Eine erste Schnittgerade 175 der zweiten Reflexionsfläche 172 mit einer Oberfläche des Lichtleiters und eine zweite Schnittgerade 176 der ersten Reflexionsfläche 171 mit einer Oberfläche des Lichtleiters verlaufen daher nicht parallel, sodass eine Ablenkung des Lichtes durch die. Reflexionsflächen möglich ist, bei der das abgelenkte Licht nicht parallel verläuft.

In der Figur 5a ist ein weiteres Ausführungsbeispiel für eine in den Lichtleiter eingebrachte Ausnehmung räumlich dargestellt. Eine dritte Ausnehmung 65 ist pyramidenförmig in den Lichtleiter eingebracht und weist eine erste Reflexionsfläche 66, eine zweite Reflexionsfläche 67, eine dritte Reflexionsfläche 68 und eine vierte Reflexionsfläche 69 auf, die die Seitenwände der pyramidenförmigen dritten Ausnehmung 65 darstellen. Durch die vier Reflexionsfläche 66, 67, 68, 69 ist eine Lichtumlenkung in vier verschiedene Richtungen möglich, sodass vier Bedienelemente beleuchtbar sind.

In der Figur 5b ist eine vierte Ausnehmung 70 räumlich dargestellt, die in den Lichtleiter in der Form einer unregelmäßig geformten Pyramide mit fünf Seitenwänden eingebracht ist. Die Seitenwände werden durch fünf Reflexionsflächen 71, 72, 73, 74 und 75 gebildet. Die Größe der Reflexionsflächen ist hierbei unterschiedlich gewählt, wodurch die Menge des in Richtung eines Bedienelements umgelenkten Lichts beeinflußt wird. Mit der in der Figur 5b gezeigten vierten Ausnehmung 70 ist das Licht entsprechend der Anordnung der Reflexionsflächen in die Richtung von fünf verschiedenen Bedienelementen umlenkbar.

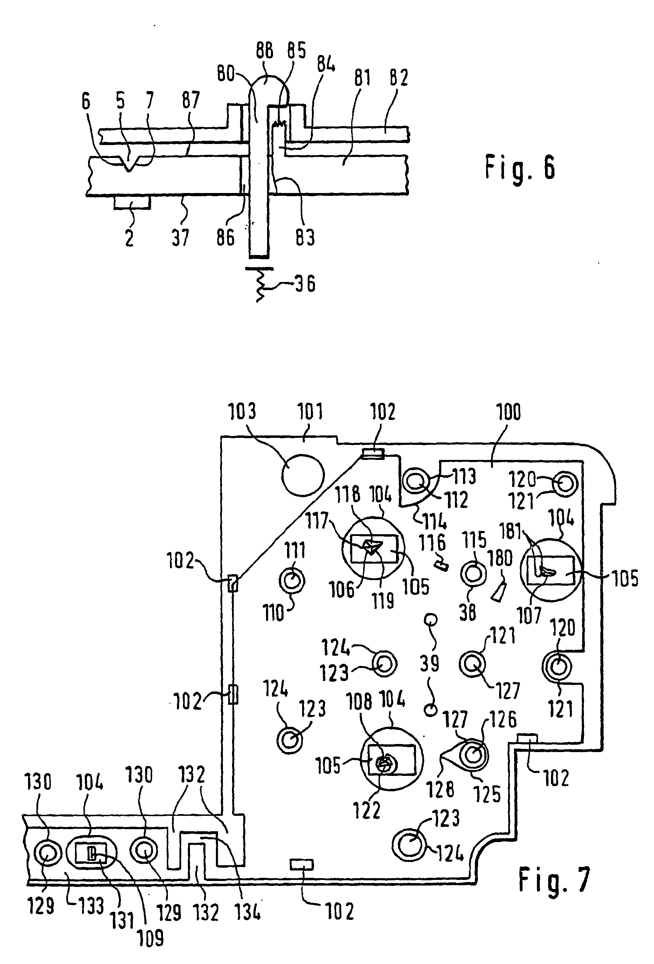

Zu der Figur 1 wurden elektrische Tasten 10, 21 beschrieben, die dazu verwendet werden, einen elektrischen Kontakt zu schließen. In der Figur 6 ist dagegen als ein weiteres Ausführungsbeispiel eine dritte Taste 80 gezeigt, die zur mechanischen Betätigung, z.B. eines Federmechanismus 36, dient. Anstelle des Federmechanismus 36 kann auch ein in der Figur 6 nicht gezeigter Rastmechanismus durch die dritte Taste 80 ausgelöst werden. Über einen derartigen Feder- bzw. Rastmechanismus 36 ist es z.B. möglich, eine Bedienvorrichtung, auf der eine Vielzahl von Bedienelementen angeordnet ist, aus einer Halterung zu lösen, z.B. die Bedienvorrichtung eines Radios, oder eine Schachtabdeckung für ein Datenträgerlaufwerk, z.B. für eine CD, zu entriegeln. Das Licht einer Lichtquelle 2 ist über die erste Reflexionsfläche 7 einer Ausnehmung 5 in Richtung der dritten Taste 80 umlenkbar. In den Lichtleiter 81 ist eine Öffnung 86 eingebracht, durch den die dritte Taste 80 von einer ersten Seitenfläche 87 durch den Lichtleiter 81 hindurch zu dem Federmechanismus 36 durchführbar ist, das an oder entfernt von einer zweiten Seitenfläche 37 angeordnet ist, die der ersten Seitenfläche 87 des Lichtleiters 81 gegenüberliegt. In die Öffnung 86 ist eine zweite Ausnehmung 83 eingebracht, die eine Reflexionsfläche bildet, durch die das von der Lichtquelle 2 ausgesandte und von der zweiten Reflexionsfläche 7 reflektierte Licht in Richtung eines Tastenkopfes 88 der dritten Taste 80 umlenkbar ist. Der Lichtleiter 81 weist hierbei eine Erweiterung 84 auf, an deren dem Tastenkopf 88 zugewandten Seite eine Streufläche 85, vorzugsweise durch die Ausbildung von Rillen, vorgesehen ist. Die Erweiterung 84 ragt hierbei über die erste Seitenfläche 87 hinaus. Aus der Erweiterung 84 ist das Licht in den Tastenkopf 88 einkoppelbar und beleuchtet den Tastenkopf 88. Der Lichtleiter 81 ist durch eine Abdeckung 82 bedeckt, die vorzugsweise lichtundurchlässig ausgeführt ist. Die Abdeckung 82 bildet ferner eine Führung für die dritte Taste 80.

In der Figur 7 ist eine Aufsicht auf einen erfindungsgemäß ausgeführten Lichtleiter 100 dargestellt, der an einem Träger 101 befestigt ist. Der Lichtleiter 100 ist dabei vorzugsweise über Rasthaken in Öffnungen 102 des Trägers 101 eingerastet. Der Träger 101 ist wiederum mittels einer in der Figur 7 nicht dargestellte Schraube durch eine Öffnung 103 auf einer ebenfalls nicht dargestellten Grundfläche befestigbar. Der Träger 101 weist ferner Öffnungen 104 für Lichtquellen 105 auf, wobei die Lichtquellen 105 vorzugsweise auf einer an einer dem Lichtleiter 100 abgewandten Seite des Trägers 101 auf einer in der Figur 7 nicht dargestellten Leiterplatte befestigt sind. Im Bereich der Lichtquellen 105 sind in den Lichtleiter 100 eine erste Ausnehmung 106, eine zweite Ausnehmung 107, eine dritte Ausnehmung 108 und eine vierte Ausnehmung 109 eingebracht. Die Ausnehmungen sind entsprechend oder ähnlich den zu den Figuren 4a, 4b, 5a und b beschriebenen Ausnehmungen gestaltet. Sowohl in den Träger 101 als auch in den Lichtleiter 100 sind jeweils Öffnungen für Tasten eingebracht. In einer ersten Öffnung 110 in dem Lichtleiter 100 und dem Träger 101 ist eine erste Taste 111 angeordnet. Von der ersten Taste 111 ist in der Figur 7 ein Querschnitt durch den Tastenfuß dargestellt. Eine zweite Taste 112 ist in einer zweiten Öffnung 113 des Trägers 101 angeordnet. Der Lichtleiter 100 weist in einem Bereich der zweiten Taste 112 einen Einschnitt 114 auf, der über die Größe der zweiten Öffnung 113 des Trägers 101 hinausgeht. Eine dritte Taste 115 ist in einer dritten Öffnung 38 sowohl des Lichtleiters 100 als auch des Trägers 101 angeordnet. Die erste Ausnehmung 106 weist eine erste Reflexionsfläche 117, eine zweite Reflexionsfläche 118 und eine dritte Reflexionsfläche 119 auf, so dass die erste Ausnehmung 106 im Wesentlichen tetraederförmig ist und eine dreieckförmige Grundfläche besitzt. Von der ersten Reflexionsfläche 117 und der ersten Ausnehmung 106 ist Licht in Richtung der ersten Taste 111 umlenkbar, von der zweiten Reflexionsfläche 118 ist Licht in Richtung der zweiten Taste 112 umlenkbar. Da sich die zweite Taste 112 nahe an der Lichtquelle 105 befindet, die der ersten Ausnehmung 106 zugeordnet ist, ermöglicht der Einschnitt 114, dass die Lichteinkopplung in die zweite Taste 112 abgeschwächt wird, so dass die zweite Taste 112 nicht heller erscheint als die erste Taste 111. Die dritte Reflexionsfläche 119 koppelt Licht in Richtung der dritten Taste 115 aus. Da die dritte Taste 115 auch von einer Reflexionsfläche der zweiten Ausnehmung 107 beleuchtbar ist, ist sowohl zwischen der ersten Ausnehmung 106 und der dritten Taste 115 als auch zwischen der zweiten Ausnehmung 107 und der dritten Taste 115 jeweils eine Einkerbung 116, 180 in den Lichtleiter 100 eingebracht. Diese dienen zur Lichtabschwächung. Ferner sind in den Lichtleiter 100 Bohrlöcher 39 eingebracht, die der Montage, z. B. einer Abdeckung, oder einer Fixierung von Tastenelementen dienen. Durch das von der zweiten Ausnehmung 107 mit Reflexionsflächen 181 reflektierte Licht sind ferner Tasten 120 in Öffnungen 121 des Lichtleiters 100 und des Trägers 101 beleuchtbar. Durch die zweite Ausnehmung 108 mit Reflexionsflächen 122 sind Tasten 123 in Öffnungen 124 des Lichtleiters 100 und des Trägers 101 beleuchtbar. Eine Öffnung 125 für eine Taste 126 in dem Lichtleiter 100 ist ebenfalls größer ausgeführt als die zu der Taste 126 gehörende Öffnung 127 des Trägers. Die Öffnung 125 in dem Lichtleiter 100 weist eine Tropfenform auf, wobei die Spitze des Tropfens der dritten Ausnehmung 108 zuweist. Auch durch diese Ausgestaltung wird die Einkopplung von Licht in die Taste 126 vermindert. Durch die vierte Ausnehmung 109 ist Licht zu Tasten 129 in Öffnungen 130 des Trägers 101 und des Lichtleiters 100 einkoppelbar. Die vierte Ausnehmung 109 mit der zugehörigen Lichtquelle 131 ist durch eine Lichtfalle von dem durch die Lichtquellen 105 beleuchteten Bereich des Lichtleiters 100 optisch getrennt. Hierzu weist der Träger 101 Erweiterungen 132 auf, so dass ein Bereich 133 des Lichtleiters, in dem die Lichtquelle 131 und die Tasten 129 angeordnet sind, nur durch eine mäanderförmige Ausformung 134 des Lichtleiters 100 mit dem übrigen Lichtleiter verbunden ist. Die Erweiterungen 132 führen in die mäanderförmige Ausformung 134 des Lichtleiters 100 hinein, wodurch das von der Lichtquelle 131 bzw. von den Lichtquellen 105 in den mäanderförmigen Bereich 134 des Lichtleiters 100 einstrahlende Licht entweder reflektiert oder absorbiert wird, so dass Licht den mäanderförmigen Bereich 134 entweder gar nicht oder nur stark abgeschwächt durchqueren kann. Hierdurch ist eine insbesondere farblich getrennte Beleuchtung des Bereichs 133 und des durch die Lichtquellen 105 beleuchtbaren Bereichs des Lichtleiters 100 möglich.

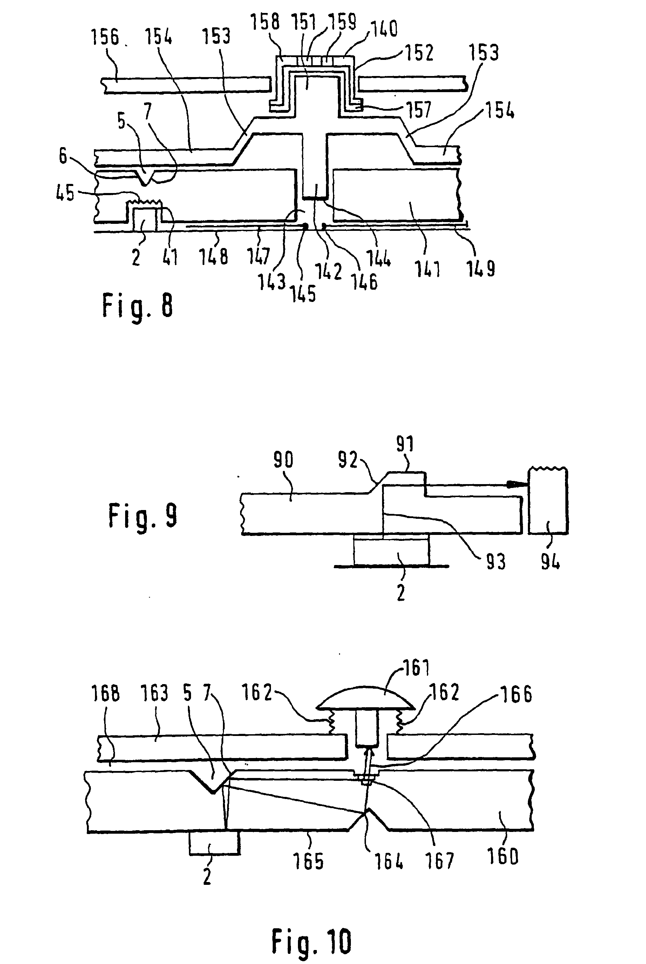

In der Figur 8 ist ein Ausführungsbeispiel für eine Ausgestaltung von über eine Schaltmatte verbundenen Tasten dargestellt, die sich insbesondere für eine Verwendung in einer zu der Figur 7 beschriebenen Anordnung eignen. Die in der Figur 8 beschriebene Taste kann auch ferner die erste Taste 10 und die zweite Taste 21 ersetzen, die zu der Figur 1 beschrieben sind. Eine Verwendung der in der Figur 8 beschriebenen Taste ist insbesondere dann sinnvoll, wenn mehrere Tasten auf einem Lichtleiter anzuordnen sind. Die Taste 140 ist an einem Lichtleiter 141 angeordnet. Ein Tastenfuß 142 der Taste 140 ist in eine Öffnung 143 des Lichtleiters 141 einführbar. An dem Tastenfuß 142 ist eine elektrisch leitfähige Schicht 144 angeordnet, die bei einer Betätigung der Taste 140 einen ersten Kontakt 145 und einen zweiten Kontakt 146 elektrisch leitend verbindet und die in ihrer Ausführung der elektrisch leitenden Schicht 13 bzw. 24 entspricht. Der erste Kontakt 145 ist mit einer ersten Leiterbahn 147, der zweite Kontakt 146 ist mit einer zweiten Leiterbahn 149 verbunden. Die Leiterbahnen 147 und 149 sind auf einer Leiterplatte 148 angeordnet. Auf der Leiterplatte 148 ist auch die Lichtquelle 2 angeordnet, deren Licht durch eine zweite Reflexionsfläche 7 in Richtung des Tastenfußes 142 umlenkbar ist. Die Taste 140 weist ferner einen Tastenkörper 151 auf, auf den eine Tastenhaube 152 aufgesetzt ist. Der Tastenkörper 151 ist ebenso wie der Tastenfuß 142 vorzugsweise aus einem Licht streuenden, flexiblen Kunststoffmaterial, z. B. Silikon gefertigt. Die Taste 140 ist über einen rund umlaufenden Tastensteg 153 mit einer Schaltmatte 154 verbunden. An der Schaltmatte 154 können noch beliebige andere, ebenso wie die Taste 140 ausgeführte Tasten angeordnet sein. Durch einen Druck auf die Tastenhaube 152 wird der Tastenkörper 151 und der Tastenfuß 142 in Richtung der elektrischen Kontakte 145, 146 bewegt. Hierbei wird der Tastensteg 153 elastisch verformt, so dass eine Gegenkraft aufgebaut wird, die nach dem Loslassen der Tastenhaube 152 dazu führt, dass die Taste 140 wieder in ihre Ausgangslage zurückbewegt wird. Die Schaltmatte 154 ist durch eine Abdeckung 156 ebenso geschützt wie der Lichtleiter 141. Die Abdeckung 156 dient dabei als Führung der Tastenhaube 152. Die Tastenhaube weist eine erste Schicht 157 auf, die vorzugsweise aus einem weißen, lichtstreuenden Kunststoffmaterial gefertigt ist. Ferner weist die Tastenhaube 152 eine zweite, lichtundurchlässige Schicht 158 auf. Die zweite, lichtundurchlässige Schicht 158 weist Öffnungen oder Durchführungen 159 auf, die einen Blick von der dem Tastenkörper 151 abgewandten Seite auf die erste Schicht 157 erlauben. In einem bevorzugten Ausführungsbeispiel ragt die erste Schicht 157 in den Bereichen 159 in die zweite Schicht 158 hinein, so dass die Bereiche 159 beleuchtet sind, sofern die Lichtquelle 2 Licht abstrahlt. Die Bereiche 159 sind dabei vorzugsweise als eine Beschriftung oder als ein Tastensymbol ausgebildet, z.B. ein Warndreieck oder eine Beschriftung "Radio ein". Die Tastenhaube 152 kann auch vollständig aus einem transparenten Material ausgeführt sein, das vorzugsweise farbig transparent ist.

In der Figur 9 ist ein weiteres Ausführungsbeispiel für eine Reflexionsfläche dargestellt. Das Licht einer Lichtquelle 2 wird in einen Lichtleiter 90 eingekoppelt. An den Lichtleiter 90 ist eine Erweiterung 91 im Bereich der Lichtquelle 2 angeformt, wobei durch die Erweiterung 91 eine Reflexionsfläche 92 ausgebildet ist, die einen Lichtstrahl 93 in Richtung eines Tastenfußes 94 umlenkt.

In der Figur 10 ist ein weiters Ausführungsbeispiel dargestellt, bei dem ein Lichtleiter 160 im Bereich einer Taste 161 keine Öffnung aufweist, sondern wobei die Taste 161 über Federelemente 162 oberhalb einer Abdeckung 163 des Lichtleiters 160 angeordnet ist. Über eine zweite Reflexionsfläche 7 einer Ausnehmung 5 ist Licht der Lichtquelle 2 von einer ersten Ausnehmung 164 in einer der Taste 161 abgewandten Seitenflächen 165 des Lichtleiters 160 umlenkbar. Ferner ist Licht, das in der Figur 10 durch einen Pfeil 166 symbolisch dargestellt ist, von der zweiten Reflexionsfläche zu einer zweiten Ausnehmung 167 umgelenkt wird, die in einer der Taste 161 zugewandten Seitenfläche 168 des Lichtleiters 161 angeordnet ist. Die zweite Ausnehmung 167 ist dabei vorzugsweise lichtstreuend ausgeführt oder mit einer angeformten Prismenstruktur versehen, um das Licht gezielt zu der Taste 161 zu lenken. Die Taste 161 ist vorzugsweise aus einem transparenten Material ausgeführt und wird durch eine Lichtumlenkung durch die erste und/oder die zweite Ausnehmung 164, 167 mit dem Licht der Lichtquelle 2 beleuchtet.

## Patentansprüche

1. Vorrichtung zur Beleuchtung eines Bedienelementes, wobei an einer ersten Seitenfläche eines Lichtleiters eine Lichtquelle angeordnet ist, wobei das Bedienelement an einer zweiten Seitenfläche des Lichtleiters angeordnet ist oder zumindest teilweise über die zweite Seitenfläche hinausragt, wobei die zweite Seitenfläche der ersten Seitenfläche gegenüberliegt, wobei an der zweiten Seitenfläche (4, 44, 56, 87, 168) eine Reflexionsfläche (5, 6, 66, 71, 92, 117, 172) angeordnet ist, wobei Licht von der Lichtquelle (2) zu der Reflexionsfläche abstrahlbar ist, wobei das Licht von der Reflexionsfläche (5, 6, 66, 71, 92, 117, 172) zu dem Bedienelement (10, 21, 88, 94, 111, 151, 161) umlenkbar ist und wobei das Bedienelement (10, 21, 88, 94, 111, 151, 161) durch das Licht beleuchtbar ist, **dadurch gekennzeichnet, dass** an dem Lichtleiter (100) in einem ersten Beleuchtungsbereich mindestens eine erste Lichtquelle (105) angeordnet ist, dass in einem zweiten Beleuchtungsbereich mindestens eine zweite Lichtquelle (131) angeordnet ist und dass zwischen dem ersten Beleuchtungsbereich und dem zweiten Beleuchtungsbereich eine Lichtfalle (132) angeordnet ist.

2. Vorrichtung nach Anspruch 1, **dadurch gekennzeichnet, dass** die Reflexionsfläche (5, 6, 66, 71, 92, 117, 172) an einer der Lichtquelle (2) gegenüberliegenden Stelle der zweiten Seitenfläche (4, 44, 56, 87, 168) des Lichtleiters (1, 40, 50, 81, 90, 100, 141, 160) angeordnet ist.

3. Vorrichtung nach einem der vorhergehenden Ansprüche, **dadurch gekennzeichnet, dass** an der zweiten Seitenfläche und/oder zumindest teilweise über die zweite Seitenfläche hinausragend eine Vielzahl von Bedienelementen (111,112,115,120,123,129) angeordnet sind und dass durch Reflexionsflächen (111,117,118,119) das abgestrahlte Licht jeweils in Richtungen der Vielzahl von Bedienelementen (111, 112, 115, 120, 123, 129) umlenkbar ist.

4. Vorrichtung nach Anspruch 3, **dadurch gekennzeichnet, dass** die Lichtquelle (105, 131) zwischen der Vielzahl von Bedienelementen (111. 113, 115, 120, 123, 129) angeordnet ist und dass das abgestrahlte Licht durch die Reflexionsflächen (111, 117, 118, 119) auf die Richtungen der Vielzahl von Bedienelementen (111, 113, 115, 120, 123, 129) bündelbar ist.

5. Vorrichtung nach einem der vorhergehenden Ansprüche, **dadurch gekennzeichnet, dass** die Reflexionsfläche (5, 6, 66, 71, 117, 172) durch eine Ausnehmung (5, 170, 67, 74) aus dem Lichtleiter (1, 40, 50, 81, 90, 100, 141, 160) oder durch eine Anformung an den Lichtleiter (90) gebildet ist.

6. Vorrichtung nach einem der vorhergehenden Ansprüche, **dadurch gekennzeichnet, dass** das Bedienelement (10, 21, 80, 111) eine Taste, vorzugsweise eine Drucktaste ist.

7. Vorrichtung nach Anspruch 6, **dadurch gekennzeichnet, dass** ein Tastenfuß (12, 23, 142) zumindest teilweise in den Lichtleiter (1, 141) hineinragt und dass Licht aus dem Lichtleiter (1, 141) in den Tastenfuß (12, 23, 142) einkoppelbar ist.

8. Vorrichtung nach Anspruch 7, **dadurch gekennzeichnet, dass** der Tastenfuß (12, 23, 142) auf einer Schaltmatte (154) angeordnet ist, dass an der Schaltmatte (154) eine Vielzahl von Tastenoberflächen (152) angeordnet sind und dass die Schaltmatte (154) vorzugsweise aus Silikon gefertigt ist.

9. Vorrichtung nach einem der Ansprüche 7-8, **dadurch gekennzeichnet, dass** der Tastenfuß (142) aus einem lichtstreuenden Material, vorzugsweise aus einem lichtstreuenden Kunststoff ausgeführt ist.

10. Vorrichtung nach einem der vorhergehenden Ansprüche, **dadurch gekennzeichnet, dass** der Lichtleiter (40) in der ersten Seitenfläche eine Ausnehmung (41) für die Lichtquelle (2) aufweist.

11. Vorrichtung nach einem der vorhergehenden Ansprüche, **dadurch gekennzeichnet, dass** zwischen der Lichtquelle (2) und der Reflexionsfläche (6, 7) eine Streufläche (45) an dem Lichtleiter (40) angeordnet ist.

12. Vorrichtung nach einem der vorhergehenden Ansprüche, **dadurch gekennzeichnet dass** die Lichtquelle (2, 56) eine Leuchtdiode ist.

13. Vorrichtung nach einem der vorhergehenden Ansprüche, **dadurch gekennzeichnet, dass** an der ersten Seitenfläche (3) eine Leiterplatte (19, 53. 147) angeordnet ist und dass die Lichtquelle (2,56) an der Leiterplatte (19, 53, 147) befestigbar ist.

14. Vorrichtung nach Anspruch 13, **dadurch gekennzeichnet, dass** die Lichtquelle (56) insbesondere als eine Gulwing-Leuchtdiode ausgeführt ist und an einer dem Lichtleiter abgewandten Seitenfläche der Leiterplatte (53) befestigbar ist.

15. Vorrichtung nach einem der vorhergehenden Ansprüche, **dadurch gekennzeichnet, dass** der Lichtleiter (1,100) auf einem reflektierenden Träger (20, 101) angeordnet ist.

16. Vorrichtung nach einem der vorhergehenden Ansprüche, **dadurch gekennzeichnet, dass** an dem Lichtleiter (160) in einem Bereich des Bedienelements (161) an der ersten Seitenfläche (165) und/oder an der zweiten Seitenfläche (168) eine Reflexionsfläche (164, 167) angeordnet ist und dass durch die Reflexionsfläche (164, 167) Licht zu dem Bedienelement (161) umlenkbar ist.

17. Vorrichtung nach einem der vorhergehenden Ansprüche, **dadurch gekennzeichnet, dass** in den Lichtleiter eine von der ersten Seitenfläche bis zu der zweiten Seitenfläche verlaufende Öffnung (8, 9, 86) zur Aufnahme des Bedienelements (10, 21, 80) eingebracht ist.

18. Vorrichtung nach Anspruch 17, **dadurch gekennzeichnet, dass** in der Öffnung (86) eine Ausnehmung (83) angeordnet ist und dass durch die Ausnehmung (83) Licht zu dem Bedienelement (80) umlenkbar ist.

19. Vorrichtung nach einem der vorhergehenden Ansprüche, **dadurch gekennzeichnet, dass** in den Lichtleiter (100) auf dem Lichtweg zwischen der Reflexionsfläche und dem Bedienelement eine Öffnung und/oder eine Ausnehmung (114, 116, 180) eingebracht sind und dass mit der Öffnung und/oder der Ausnehmung das von der Reflexionsfläche zu dem Bedienelement reflektierte Licht zumindest teilweise umlenkbar ist.

20. Verwendung einer Vorrichtung nach einem der vorherigen Ansprüche zur Beleuchtung von Bedienelementen für eine Fahrerinformationsvorrichtung, eine Navigationsvorrichtung und/oder eine Autoradiovorrichtung in einem Fahrzeug, insbesondere in einem Kraftfahrzeug.

## Revendications

1. Dispositif d'éclairage d'un élément de commande, une source lumineuse étant disposée sur une première surface latérale d'un conducteur optique, l'élément de commande étant disposé sur une deuxième surface latérale du conducteur optique, ou dépassant au moins partiellement sur la deuxième surface latérale, la deuxième surface latérale faisant face à la première surface latérale, une surface réfléchissante (5, 6, 66, 71, 92, 117, 172) étant disposée sur la deuxième surface latérale (4, 44, 56, 87, 168), de la lumière pouvant être émise de la source lumineuse (2) vers la surface réfléchissante, la lumière pouvant être déviée de la surface réfléchissante (5, 6, 66, 71, 92, 117, 172) vers l'élément de commande (10, 21, 88, 94, 111, 151, 161), et l'élément de commande (10, 21, 88, 94, 111, 151, 161) pouvant être éclairé par la lumière, au moins une première source lumineuse (105) est disposée sur le conducteur optique (100) dans une première zone d'éclairage, au moins une deuxième source lumineuse (131) est disposée dans une deuxième zone d'éclairage, et un piège de lumière (132) est disposé entre la première zone d'éclairage et la seconde.

2. Dispositif selon la revendication 1,
**caractérisé en ce que**
la surface réfléchissante (5, 6, 66, 71, 92, 117, 172) est disposée sur un point opposé à la source lumineuse (2) de la deuxième surface latérale (4, 44, 56, 87, 168) du conducteur optique (1, 40, 50, 81, 90, 100, 141, 160).

3. Dispositif selon l'une des revendications précédentes,
**caractérisé en ce que**
de nombreux éléments de commande (111, 112, 115, 120, 123, 129) sont disposés en saillie sur la deuxième surface latérale et/ou au moins partiellement sur la deuxième surface latérale et la lumière émise peut être déviée par les surfaces réfléchissantes (111, 117, 118, 119) en direction des nombreux éléments de commande (111, 112, 115, 120, 123, 129).

4. Dispositif selon la revendication 3,
**caractérisé en ce que**
la source lumineuse (105, 131) est disposée entre les nombreux éléments de commande (111. 113, 115. 120, 123, 129) et la lumière émise peut être focalisée par les surfaces réfléchissantes (111, 117, 118, 119) en direction des nombreux éléments de commande (111, 113, 115, 120, 123, 129).

5. Dispositif selon l'une des revendications précédentes,
**caractérisé en ce que**
la surface réfléchissante (5, 6, 66, 71, 117, 172) est formée par un évidement (5, 170, 67, 74) à partir du conducteur optique (1, 40, 50, 81, 90, 100, 141, 160) ou par une déformation sur le conducteur optique (90).

6. Dispositif selon l'une des revendications précédentes,
**caractérisé en ce que**
l'élément de commande (10, 21, 80, 111) est une touche, de préférence un touche à enfoncer.

7. Dispositif selon la revendication 6,
**caractérisé en ce qu'**
une base de touche (12, 23, 142) dépasse au moins partiellement dans le conducteur optique (1, 141), et de la lumière peut être injectée du conducteur optique (1, 141) dans la base de touche (12, 23, 142).

8. Dispositif selon la revendication 7,
**caractérisé en ce que**
la base de touche (12, 23, 142) est disposée sur un tapis de commutation (154), de nombreuses surfaces de touche (152) sont disposées sur le tapis de commutation (154) et le tapis de commutation (154) est fabriqué de préférence en silicone.

9. Dispositif selon l'une des revendications 7 à 8,
**caractérisé en ce que**
la base de touche (142) est réalisée dans un matériau diffusant la lumière, de préférence dans un plastique diffusant la lumière.

10. Dispositif selon l'une des revendications précédentes,
**caractérisé en ce que**
le conducteur optique (40) présente un évidement (41) pour la source lumineuse (2) dans la première surface latérale.

11. Dispositif selon l'une des revendications précédentes,
**caractérisé en ce qu'**
une surface diffusante (45) est disposée sur le conducteur optique (40) entre la source lumineuse (2) et la surface réfléchissante (6, 7).

12. Dispositif selon l'une des revendications précédentes,
**caractérisé en ce que**
la source lumineuse (2, 56) est une diode lumineuse.

13. Dispositif selon l'une des revendications précédentes,
**caractérisé en ce qu'**
une carte de circuit (19, 53, 147) est disposée sur la première surface latérale (3), et la source lumineuse (2, 56) peut être fixée sur la carte de circuit (19, 53, 147).

14. Dispositif selon la revendication 13,
**caractérisé en ce que**
la source lumineuse (56) est réalisée notamment comme une diode lumineuse gullwing et peut être fixée à l'une des surfaces latérales de la carte de circuit (53) détournée du conducteur optique.

15. Dispositif selon l'une des revendications précédentes,
**caractérisé en ce que**
le conducteur optique (1, 100) est disposé sur un support réfléchissant (20, 101).

16. Dispositif selon l'une des revendications précédentes,
**caractérisé en ce qu'**
une surface réfléchissante (164, 167) est disposée sur le conducteur optique (160) dans une zone de l'élément de commande (161) sur la première surface latérale (165) et/ou sur la deuxième surface latérale (168), et la lumière peut être déviée vers l'élément de commande (161) par la surface réfléchissante (164, 167).

17. Dispositif selon l'une des revendications précédentes,
**caractérisé en ce qu'**
une ouverture (8, 9, 86) allant de la première surface latérale à la deuxième surface latérale pour loger l'élément de commande (10, 21, 80) est appliquée dans le conducteur optique.

18. Dispositif selon la revendication 17,
**caractérisé en ce qu'**
un évidement (83) est disposé dans l'ouverture (86), et la lumière peut être déviée par l'évidement (83) vers l'élément de commande (80).

19. Dispositif selon l'une des revendications précédentes,
**caractérisé en ce qu'**
une ouverture et/ou un évidement (114, 116, 180) sont appliqués dans le conducteur optique (100) sur la trajectoire de la lumière entre la surface réfléchissante et l'élément de commande, et la lumière réfléchie par la surface réfléchissante vers l'élément de commande peut être au moins en partie déviée par l'ouverture et/ou l'évidement.

20. Utilisation d'un dispositif selon l'une des revendications précédentes pour éclairer des éléments de commande d'un dispositif d'information des conducteurs, un dispositif de navigation et/ou un dispositif d'autoradio dans un véhicule, notamment dans une voiture.

## Claims

1. Device for illuminating a control element, a light source being arranged on a first lateral surface of a light guide, the control element being arranged on a second lateral surface of the light guide or projecting at least partially over the second lateral surface, the second lateral surface being situated opposite the first lateral surface, a reflecting surface (5, 6, 66, 71, 92, 117, 172) being arranged on the second lateral surface (4, 44, 56, 87, 168), light being able to be emitted from the light source (2) to the reflecting surface, the light from the reflecting surface (5, 6, 66, 71, 92, 117, 172) being able to be deflected to the control element (10, 21, 88, 94, 111, 151, 161), and the control element (10, 21, 88, 94, 111, 151, 161) being able to be illuminated by the light **characterized in that** at least one first light source (105) is arranged on the light guide (100) in a first illuminating region, **in that** at least one second light source (131) is arranged in a second illuminating region, and **in that** a light trap (132) is arranged between the first illuminating region and the second illuminating region.

2. Device according to Claim 1, **characterized in that** the reflecting surface (5, 6, 66, 71, 92, 117, 172) is arranged at a point, situated opposite the light source (2), on the second lateral surface (4, 44, 56, 87, 168) of the light guide (1, 40, 50, 81, 90, 100, 141, 160).

3. Device according to one of the preceding claims, **characterized in that** a multiplicity of control elements (111, 112, 115, 120, 123, 129) are arranged on the second lateral surface and/or at least partially projecting over the second lateral surface, and **in that** the emitted light can be deflected in each case by reflecting surfaces (111, 117, 118, 119) in directions of the multiplicity of control elements (111, 112, 115, 120, 123, 129).

4. Device according to Claim 3, **characterized in that** the light source (105, 131) is arranged between the multiplicity of control elements (111, 113, 115, 120, 123, 129), and **in that** the emitted light can be focused by the reflecting surfaces (111, 117, 118, 119) in the directions of the multiplicity of control elements (111, 113, 115, 120, 123, 129).

5. Device according to one of the preceding claims, **characterized in that** the reflecting surface (5, 6, 66, 71, 117, 172) is formed by a cutout (5, 170, 67, 74) from the light guide (1, 40, 50, 81, 90, 100, 141, 160) or by an integrally formed part on the light guide (90).

6. Device according to one of the preceding claims, **characterized in that** the control element (10, 21, 80, 111) is a key, preferably a button.

7. Device according to Claim 6, **characterized in that** a key foot (12, 23, 142) projects at least partially into the light guide (1, 141), and **in that** light can be launched from the light guide (1, 141) into the key foot (12, 23, 142).

8. Device according to Claim 7, **characterized in that** the key foot (12, 23, 142) is arranged on a switching mat (154), **in that** a multiplicity of key surfaces (152) are arranged on the switching mat (154), and **in that** the switching mat (154) is preferably produced from silicone.

9. Device according to one of Claims 7-8, **characterized in that** the key foot (142) is made from a light-scattering material, preferably from a light-scattering plastic.

10. Device according to one of the preceding claims, **characterized in that** the light guide (40) has a cutout (41) for the light source (2) in the first lateral surface.

11. Device according to one of the preceding claims, **characterized in that** a scattering surface (45) is arranged on the light guide (40) between the light source (2) and the reflecting surface (6, 7).

12. Device according to one of the preceding claims, **characterized in that** the light source (2, 56) is a light-emitting diode.

13. Device according to one of the preceding claims, **characterized in that** a printed circuit board (19, 53, 147) is arranged on the first lateral surface (3) and **in that** the light source (2, 56) can be fastened on the printed circuit board (19, 53, 147).

14. Device according to Claim 13, **characterized in that** the light source (56) is designed in particular as a Gulwing light-emitting diode and can be fastened on a lateral surface of the printed circuit board (53) which is diverted from the light guide.

15. Device according to one of the preceding claims, **characterized in that** the light guide (1, 100) is arranged on a reflecting support (20, 101).

16. Device according to one of the preceding claims, **characterized in that** a reflecting surface (164, 167) is arranged on the light guide (160) in a region of the control element (161) on the first lateral surface (165) and/or on the second lateral surface (168), and **in that** light can be deflected to the control element (161) by the reflecting surface (164, 167).

17. Device according to one of the preceding claims, **characterized in that** an opening (8, 9, 86), extending from the first lateral surface up to the second lateral surface, for holding the control element (10, 21, 80) is introduced into the light guide.

18. Device according to Claim 18, **characterized in that** a cutout (83) is arranged in the opening (86) and **in that** light can be deflected to the control element (80) through the cutout (83).

19. Device according to one of the preceding claims, **characterized in that** an opening and/or a cutout (114, 116, 180) are introduced into the light guide (100) on the light path between the reflecting surface and the control element, and **in that** the light reflected by the reflecting surface to the control element can be deflected at least partially with the aid of the opening and/or the cutout.

20. Use of a device according to one of the preceding claims for illuminating control elements for a driver information device, a navigation device and/or a car radio device in a vehicle, in particular in a motor vehicle.
